# EUROPÄISCHE PATENTANMELDUNG

(11) **EP 2 207 128 A1**
(43) Veröffentlichungstag der Anmeldung: **14.07.2010**
(21) Anmeldenummer: 09175407.7
(22) Anmeldetag: 09.11.2009
(51) Int. Cl.: G06K 9/00

(54) **Überwachungsvorrichtung sowie Sensoreinrichtung zur Erfassung der Bodenkontaktflächen eines Überwachungsobjektes für die Überwachungsvorrichtung**

(30) Priorität: 08.01.2009 DE 102009000074
(71) Anmelder: Robert Bosch GmbH, 70442 Stuttgart (DE)
(72) Erfinder: Baumann, Axel, 31180 Giesen (DE); Loos, Hartmut, 31141 Hildesheim (DE); Warzelhan, Jan Karl, 31135 Hildesheim (DE)

(57) **Zusammenfassung**

Bei heutigen Überwachungssystemen werden sehr oft Überwachungskameras eingesetzt, welche Personen innerhalb eines Überwachungsbereiches beobachten, automatisch erkennen und auch über ausgedehnte Bereiche mittels eines Kameranetzwerkes verfolgen.

Demgegenüber wird eine Überwachungsvorrichtung 1 für einen Überwachungsbereich 7,9, in dem sich mindestens ein Überwachungsobjekt aufhalten kann, vorgeschlagen, mit einer Sensoreinrichtung 2, welche zur Erfassung des Überwachungsobjekts ausgebildet und/oder angeordnet ist, wobei die Sensoreinrichtung 2 zur ortsaufgelösten Erfassung der Bodenkontaktfläche des Überwachungsobjekts als Objektprofil ausgebildet und/oder angeordnet ist.

## Beschreibung

### Stand der Technik

Die Erfindung betrifft eine Überwachungsvorrichtung für einen Überwachungsbereich, in dem sich mindestens ein Überwachungsobjekt aufhalten kann, mit einer Sensoreinrichtung, welche zur Erfassung des Überwachungsobjektes ausgebildet ist, sowie eine Sensoreinrichtung für die Überwachungsvorrichtung.

Bei heutigen Überwachungssystemen werden sehr oft Überwachungskameras eingesetzt, welche Personen innerhalb eines Überwachungsbereiches beobachten, automatisch erkennen und auch über ausgedehnte Bereiche mittels eines Kameranetzwerkes verfolgen. Die Erkennung der Personen stützt sich dabei auf üblicherweise auf optische Merkmale der Personen, die über Bildverarbeitungsalgorithmen aus den Bildern der Überwachungskameras extrahiert werden.

Wesentlich robuster bei der Erkennung von Personen sind dagegen Sensoreinrichtungen, wie zum Beispiel Fingerabdruckscanner, die den Fingerabdruck einer Person einscannen, oder sogar Kartenlesegeräte, bei denen die Personen Identifikationskarten eingeben müssen.

Ein derartiger Fingerabdrucksensor ist beispielsweise in der Offenlegungsschrift DE 100 30 404 A1 offenbart. Aus der Druckschrift US 6,735,547 B1 ist für den Bereich der Orthopädie eine Vorrichtung bekannt, mit der die Form und die Größe eines Fußes erfasst wird, wobei der Fuß zunächst in einem kompressiblen Material eingedrückt wird und nachfolgend der Abdruck mit einem Scanner erfasst wird.

Derartige Sensoreinrichtungen setzen jedoch eine Kooperation der Person mit der Überwachungsvorrichtung voraus. Eine derartige Kooperation ist jedoch oftmals weder von dem Betreiber der Überwachungsvorrichtung noch von den Personen in dem Überwachungsbereich gewünscht, vielmehr soll die Überwachung im Hintergrund und quasi unbemerkt stattfinden.

Als nächstkommender Stand der Technik wird von üblichen Überwachungsvorrichtungen ausgegangen, wie sie in der Einleitung diskutiert wurden.

### Offenbarung der Erfindung

Im Rahmen der Erfindung wird eine Überwachungsvorrichtung mit den Merkmalen des Anspruches 1 und eine Sensoreinrichtung mit den Merkmalen des Anspruchs 11 vorgeschlagen. Bevorzugte oder vorteilhafte Ausführungsformen der Erfindung ergeben sich aus den Unteransprüchen, der nachfolgenden Beschreibung sowie den beigefügten Figuren.

Die erfindungsgemäße Überwachungsvorrichtung ist zur Überwachung von einem Überwachungsbereich geeignet und/oder ausgebildet, wobei der Überwachungsbereich mindestens ein Überwachungsobjekt aufweisen kann. Das Überwachungsobjekt kann als eine Person, wie z.B. ein Besucher, realisiert sein. Alternativ oder ergänzend kann das Überwachungsobjekt auch als ein Mobil, insbesondere ein Auto, Fahrrad oder ein beliebiges, bewegtes Objekt ausgebildet sein. Vorzugsweise können sich in dem Überwachungsbereich mehrere gleichartige oder verschiedenartige Überwachungsobjekte aufhalten.

Die Überwachungsvorrichtung umfasst mindestens eine Sensoreinrichtung, welche zur Erfassung des Überwachungsobjektes ausgebildet ist.

Im Rahmen der Erfindung wird vorgeschlagen, dass die Sensoreinrichtung zur ortsaufgelösten Erfassung der Bodenkontaktfläche des Überwachungsobjektes als Objektprofil ausgebildet und/oder angeordnet ist.

Unter der Bodenkontaktfläche wird der Bereich des Überwachungsobjektes verstanden, welcher mit einem Boden oder einem Untergrund, insbesondere aufgrund der Schwerkraft, in Kontakt kommt. Unter einer ortsaufgelösten Erfassung wird bevorzugt mindestens die Erfassung einer Grobkontur der Bodenkontaktfläche und insbesondere die Erfassung einer Substruktur dieser Grobkontur versanden. Die Grobkontur ist beispielsweise der Außenumriss einer Schuhsohle, die Substruktur betrifft die Profilierung der Bodenkontaktfläche, also z.B. des Schuhs oder des Reifens.

Es ist eine Überlegung der Erfindung, dass das Objektprofil ein robustes Merkmal zur Erkennung oder Wiedererkennung des Überwachungsobjektes darstellt. Die Qualität des Objektprofils als Merkmal zur Erkennung oder Wiedererkennung ist sehr hoch, da neben der Grobform des Objektprofils individuelle Abnutzungsspuren oder dergleichen des Objektprofils oder eine unterschiedliche Belastung des Objektprofils charakteristische und charakterisierende Merkmale bilden können, welche optional mit der Sensoreinrichtung aufgenommen werden und einen Teil des Objektprofils bilden.

Bei der Erfassung des Objektprofils ist die Kooperation des Überwachungsobjektes nicht notwendig, da es sich zwangsläufig über den Boden oder den Untergrund bewegen und diesen dabei kontaktieren muss.

Die Überwachungsvorrichtung weist somit den Vorteil auf, dass mit einer Sensoreinrichtung, welche keine aktive Kooperation des Überwachungsobjektes benötigt, aussagekräftige Merkmale des Überwachungsobjektes zur Erkennung bzw. Wiedererkennung erfasst werden können.

Bei einer bevorzugten Ausführungsform der Erfindung weist das Objektprofil eine ortsaufgelöste Kraft- und/oder Wärme- und/oder Konturverteilung auf. Somit kann bei der ersten Option die Andruckkraft des Überwachungsobjektes ortsaufgelöst erfasst werden. Bei der zweiten Option wird eine Wärmeverteilung, wie sie zum Beispiel durch Reibung oder durch Ausstrahlung des

Überwachungsobjektes entsteht, ortsaufgelöst erfasst werden. Bei der dritten Option wird die geometrische Form der Bodenkontaktfläche als Objektprofil verwendet. Durch Einzelauswahl oder einer Kombination einer beliebigen Anzahl dieser Optionen kann eine sehr aussagekräftige Charakterisierung erfolgen.

Bei einer möglichen Weiterbildung der Erfindung ist das Objektprofil, insbesondere die Konturverteilung, zwei- oder dreidimensional ausgebildet. Betrachtet man beispielsweise einen Autoreifen, so kann die Konturverteilung nur die tatsächliche Kontaktfläche des Reifens mit dem Boden betreffen und eine zweidimensionale Konturverteilung darstellen oder die Sensoreinrichtung ist ausgebildet, den Reifen im Bereich der Bodenkontaktfläche dreidimensional abzubilden, so dass beispielsweise die Tiefe der Rillen ebenfalls erfasst und ausgewertet werden kann. Gleiche Möglichkeiten ergeben sich für das Profil von Schuhsohlen.

Bei einer möglichen Ausbildungsform der Erfindung ist die Sensoreinrichtung als eine Kamera, ein Lichtscanner, eine Mehrzahl von Drucksensoren, eine Laserabtastung und/oder eine Mehrzahl von Wärmesensoren, insbesondere zur Reibungserkennung, ausgebildet. Die Aufzählung der Sensortypen ist hierbei nur beispielhaft zu verstehen und kann durch beliebige Sensoren ergänzt werden, welche die ortsaufgelöste Erfassung der Bodenkontaktfläche als Objektprofil erlauben.

Vorzugsweise weist die Überwachungsvorrichtung ein Klassifikationsmodul auf, welches ausgebildet ist, das Objektprofil in verschiedene Klassifikationen einzuteilen: Eine erste mögliche Klassifikation betrifft beispielsweise die Schuh-oder Fußgröße des Überwachungsobjektes. Diese Klassifikation kann es ermöglichen, die als Personen ausgebildeten Überwachungsobjekte in Kinder und Erwachsene und/oder- bei einer starken Näherung - in Frauen und Männer einzuteilen. Eine weitere mögliche Klassifikation betrifft die Bewegungsrichtung, da die meisten Bodenkontaktflächen von Überwachungsobjekten eine bestimmungsgemäße Bewegungsrichtung haben. So weisen Reifen, insbesondere Fahrrad- oder Autoreifen, meist eine Vorwärtsdrehrichtung auf, in der sie üblicherweise auch montiert sind. Bei Personen kann anhand der Ausrichtung von Schuhen (Schuhspitze und Hacke) in einfacher Weise auf die Bewegungsrichtung geschlossen werden. Mit dieser Ausgestaltung ist es möglich, Aussage nicht nur über die Existenz oder Anzahl der mit der Sensoreinrichtung in Wechselwirkung getretenen Überwachungsobjekte eine Aussage zu treffen, sondern auch über deren Alter, Geschlecht und/oder Bewegungsrichtung.

Bei einer möglichen Weiterbildung der Erfindung weist die Überwachungsvorrichtung ein Objekterkennungsmodul auf, welches für einen Vergleich eines gespeicherten Objektprofils und/oder eines Referenzobjektprofils mit einem aktuellen Objektprofil ausgebildet ist. Beispielsweise kann festgestellt werden, ob ein bestimmtes Überwachungsobjekt bereits die gleiche oder eine andere gleichartige Sensoreinrichtung ausgelöst hat.

Bei einer weiteren möglichen Ausbildungsform der Erfindung weist die Überwachungsvorrichtung ein Objektverfolgungsmodul auf, welches ausgebildet ist, das Überwachungsobjekt unter Verwendung des Objektprofils als Objektmerkmal zu verfolgen. Bei dieser Ausgestaltung ist es möglich, dass in dem Überwachungsbereich eine Mehrzahl derartiger Sensoreinrichtungen verschaltet sind, so dass ein Überwachungsobjekt, welches nacheinander die Sensoreinrichtungen oder eine Auswahl der Sensoreinrichtungen abläuft, über den Vergleich des Objektprofils als Objektmerkmal wiedererkannt und verfolgt werden kann. Damit ist es möglich, eine Trajektorie für ein bestimmtes Überwachungsobjekt aufzustellen. Besonders hervorzuheben ist bei dieser Ausführungsform, dass für die Objektverfolgung eine Objektidentifizierung nicht notwendig ist, sondern dass es möglich ist, das Objektprofil als ausschließliches Objektmerkmal zu verwenden. Diese besondere Ausgestaltung hat den Vorteil, dass die Sicherung der Privatsphäre des Überwachungsobjektes gewährleistet ist.

Optional wird das Objektprofil des Überwachungsobjektes aber mit anderen Objektmerkmalen aus anderen Sensoren, zum Beispiel aus einer Kameraüberwachung, fusioniert, um die Erkennung, Wiedererkennung bzw. Verfolgung des Überwachungsobjektes zu verbessern.

Bei einer möglichen Ausgestaltung der Erfindung weist die Überwachungsvorrichtung eine Mehrzahl derartiger Sensoreinrichtungen auf, die in dem Ein- und/oder Ausgangsbereich des Überwachungsbereiches angeordnet sind, wobei die Überwachungsvorrichtung für ein Zählen von Überwachungsobjekten ausgebildet ist. Dadurch, dass auch die Bewegungsrichtung aus dem Objektprofil ermittelt werden kann, ist es möglich, die tatsächliche Anzahl von Überwachungsobjekten in dem Überwachungsbereich durch Überwachung der Eingangs- und Ausgangsbereiche mit der Überwachungsvorrichtung zu ermitteln.

Bei einer Weiterbildung der Erfindung ist die Überwachungsvorrichtung zur Aufstellung in einem Geschäft, insbesondere zur Analyse des Kundenverhaltens, ausgebildet, wobei die Sensoreinrichtungen in dem Geschäft verteilt angeordnet sind. Mittels der Objektverfolgung ist es möglich, einen Kunden als Überwachungsobjekt in seinem Einkaufsverhalten zu beobachten und gegebenenfalls sogar Charakteristika des Kunden (wie zum Beispiel Geschlecht oder Alter) bei der Überwachung zu ergänzen. Bei einer möglichen Ergänzung dieser Ausgestaltung sind an der Kasse des Geschäfts Erfassungsmittel zur Erfassung der eingekauften Waren angeordnet und ebenfalls signaltechnisch mit der Überwachungsvorrichtung verbunden. Durch diese Ergänzung ist es möglich einen Einkaufsweg des Kunden mit den eingekauften Waren und optional ergänzend mit dem Alter und/oder Geschlecht des Kunden in Verbindung zu setzen und als Überwachungsergebnis zur weiteren Analyse auszugeben.

Ein weiterer Gegenstand der Erfindung betrifft eine Sensoreinrichtung, welche zur Verwendung in der Überwachungsvorrichtung nach einem der vorhergehenden Ansprüche bzw. wie sie soeben beschrieben wurde ausgebildet ist. Die Sensoreinrichtung ist **dadurch gekennzeichnet, dass** die Messfläche oder Kontaktfläche der Sensoreinrichtung verdeckt und/oder an die Umgebung angepasst und/oder dauerbelastbar ausgebildet ist. Insbesondere ist die Abdeckung der Sensoreinrichtung so beschaffen, dass sie sich im Boden so gut integriert, dass niemand erkennt, dass es sich um eine Sensoreinrichtung handelt. Vorzugsweise schließt die Mess- und/oder Kontaktfläche bündig mit dem benachbarten Bodenbereich ab. Eine derartige Ausgestaltung hat den Vorteil, dass mutwillige Manipulationen oder Demolierung der Sensoreinrichtungen nahezu ausgeschlossen werden können. Durch eine dauerbelastbare Ausbildung der Mess- oder Kontaktfläche kann gewährleistet werden, dass die Sensoreinrichtung verschleißfrei und damit wartungsarm eingebaut werden kann.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: ein schematisches Blockdiagramm einer Überwachungsvorrichtung mit einer Mehrzahl von Sensoreinrichtungen als ein erstes Ausführungsbeispiel der Erfindung;
- Figur 2: eine schematische Draufsicht auf einen Raum mit Ein- und Ausgängen und mit einer Überwachungsvorrichtung als ein zweites Ausführungsbeispiel der Erfindung;
- Figur 3: eine schematische Draufsicht auf ein Geschäft mit einer Überwachungsvorrichtung als ein drittes Ausführungsbeispiel der Erfindung.

Gleiche oder einander entsprechende Teile sind in den Figuren jeweils mit gleichen oder einander entsprechenden Bezugszeichen versehen.

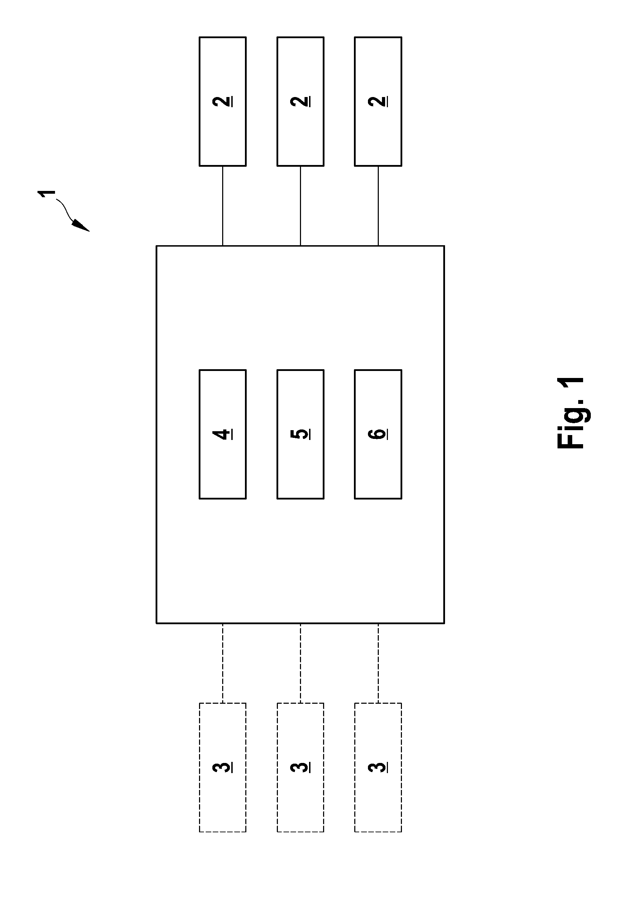

Die Figur 1 zeigt in einer schematischen Blockdarstellung eine Überwachungsvorrichtung 1, welche mit einer Mehrzahl von Sensoreinrichtungen 2 signaltechnisch verbunden ist.

Die Sensoreinrichtungen 2 sind zur ortsaufgelösten Erfassung der Bodenkontaktfläche eines Überwachungsobjektes als Objektprofil ausgebildet. Damit nutzen die Sensoreinrichtungen 2 den Kontakt des Überwachungsobjektes mit dem Boden, welches von der Überwachungsvorrichtung 1 als neuartiges Objektmerkmal weiter verarbeitet wird. Das Profil und die Form dieser Kontaktfläche als Objektprofil dient als Identifikationsmerkmal. Bei Personen werden beispielsweise die Schuhsohlen, bei Fahrzeugen (Auto, Fahrrad) das Reifenprofil verwendet. Somit können durch die Sensoreinrichtung 2 auch nicht kooperative Überwachungsobjekte detektiert werden oder eine unbemerkte Detektion erfolgen. Die Sensoreinrichtung 2 ist in dem Bodenbereich angeordnet bzw. integriert und ermittelt die Charakteristik der Kontaktfläche einer Messfläche mit dem Überwachungsobjekt als Objektprofil. Zur Bestimmung des Objektprofils sind beispielsweise folgende Sensoren denkbar: Kameras, Lichtscanner, Drucksensoren, Laser und/oder Wärmesensoren zur Reibungserkennung.

Das mit der Sensoreinrichtung 2 aufgenommene Objektprofil wird an die Überwachungsvorrichtung 1 weitergegeben, um die Überwachungsobjekte anhand ihres charakteristischen Abdrucks wiedererkennen zu können. Die Sensoreinrichtungen 2 bzw. die Überwachungsvorrichtung 1 kann beispielsweise zur Erkennung von Personen oder auch von Fahrzeugen ausgebildet sein.

Optional weist die Überwachungsvorrichtung 1 weitere Sensoren 3 auf, welche beispielsweise als Überwachungskameras, Mikrofone etc. ausgebildet sein können, wobei ein Wiedererkennen des Überwachungsobjekts durch eine Fusion der Daten von der Sensoreinrichtung 2 und den weiteren Sensoren 3, also durch eine gemeinsamen Auswertung dieser Daten, erreicht wird.

Als eine mögliche Option weist die Überwachungsvorrichtung 1 ein Klassifikationsmodul 4 auf, welches ausgebildet ist, die Überwachungsobjekte anhand des Objektprofils zu klassifizieren. Zum Beispiel verwendet das Klassifikationsmodul 4 einen oder mehrere Klassifikatoren, welche trainiert sind, um anhand des Objektprofils Frauenschuhe von Männerschuhen zu unterscheiden. Alternativ oder ergänzend kann ein oder mehrere Klassifikatoren mit der Schuhgröße des Objektprofils trainiert werden, um eine Klassifikation nach Geschlecht oder Alter zu erreichen. Zu dem ist es mit dem Klassifikationsmodul 4 optional möglich, eine Bewegungsrichtung des Überwachungsobjektes abzuschätzen, indem spezifische Merkmale des Objektprofils, wie zum Beispiel eine Schuhspitze oder eine Profilrichtung eines Reifens, ausgewertet werden.

Als weitere Option weist die Überwachungsvorrichtung 1 ein Objekterkennungsmodul 5 auf, welches es erlaubt, ein aktuell aufgenommenes Objektprofil mit einem abgespeicherten Objektprofil zu vergleichen und gegebenenfalls wiederzuerkennen. Die Wiedererkennung und die Trennung von unterschiedlichen Überwachungsobjekten erfolgt sehr robust, da die Objektprofile bzw. Kontaktabdrücke als sehr charakteristisch angesehen werden können.

Neben dem primären Profil, zum Beispiel der Schuhsohle oder des Reifens, führen individuelle Abnutzungsspuren zu charakteristischen Merkmalen, die zum Beispiel auch eine Unterscheidung von zwei Personen, welche den gleichen Typ Schuhe tragen, ermöglichen.

Eine weitere Option bildet ein Objektverfolgungsmodul 6, welches es erlaubt, insbesondere im Zusammenspiel mit dem Objekterkennungsmodul 5 ein Überwachungsobjekt in dem Überwachungsbereich zu verfolgen. Hierbei werden die von verschiedenen Sensoreinrichtungen 2 aufgenommenen Objektprofile miteinander verglichen und bei einer ausreichenden Übereinstimmung einem gemeinsamen Überwachungsobjekt zugeordnet. Nach der Zuordnung ist es möglich, vorzugsweise ausschließlich durch Verendung des Objektprofils, ein Überwachungsobjekt in einem Überwachungsbereich zu verfolgen. Vorteilhaft ist hierbei, dass keine weiteren personenspezifischen Daten über das Überwachungsobjekt gesammelt und/oder ausgewertet werden, so dass eine Privatsphärensicherheit gewährleistet ist.

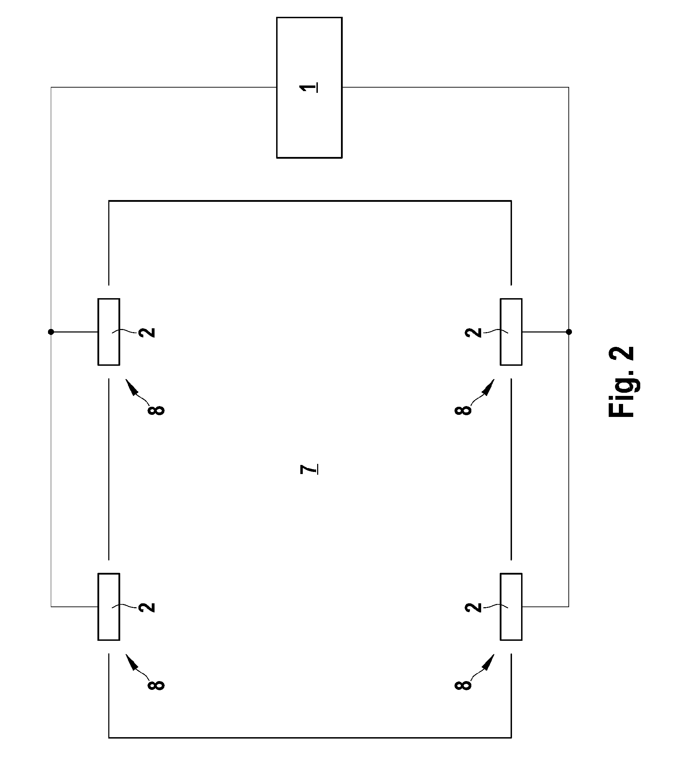

Die Figur 2 zeigt in einer schematischen Draufsicht von oben einen Raum 7, welcher eine Mehrzahl von Zugängen 8 als Ein- bzw. Ausgängen aufweist. An jedem dieser Zugänge 8 ist eine Sensoreinrichtung 2 angeordnet, welche mit der Überwachungsvorrichtung 1 signaltechnisch, zum Beispiel kabellos oder kabelgebunden, verbunden sind. Die Sensoreinrichtungen 2 sind unsichtbar in den Boden integriert und von der Fläche so ausgeführt, dass bei einer normalen Gangart jede durch einen Zugang 8 passierende Person durch die entsprechende Sensoreinrichtung erfasst wird.

Der in der Figur 2 gezeigte Aufbau kann zum Zählen von Personen verwendet werden, welche den Raum 7 betreten oder verlassen, wobei durch das Klassifikationsmodul 4 durch Auswertung der Richtung des Objektprofils zwischen einem Betreten und einem Verlassen des Raums 7 unterschieden werden kann. Eine derartige Personenzählung kann zum Beispiel für Messen oder Veranstaltungen ohne Ticketkauf und ohne Zählschranken eingesetzt werden. Bei Einsatz des Klassifikationsmoduls 4 kann zudem eine Klassifikation nach Geschlecht anhand des Objektprofils erfolgen und für statistische Zwecke der Veranstaltung ausgelesen werden.

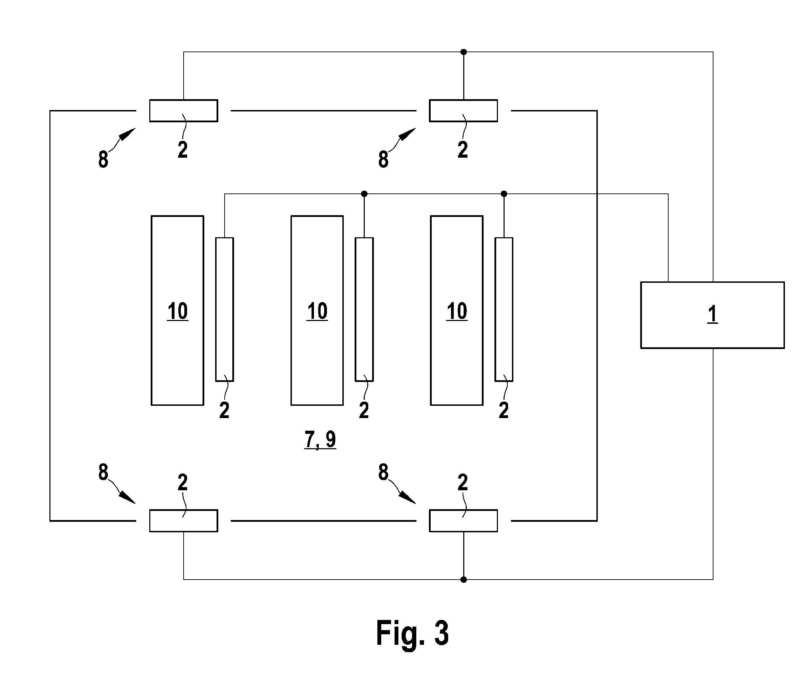

Die Figur 3 zeigt eine Erweiterung des Aufbaus in der Figur 2, wobei zum Zwecke der beispielhaften Darstellung der Raum 7 nun als ein Verkaufsraum 9 mit mehreren Verkaufsständen 10 mit ausliegenden Waren ausgebildet ist. Selbstverständlich kann der Überwachungsbereich auch einem anderen Zweck dienen. In Ergänzung zu den Sensoreinrichtungen 2 der Figur 2 sind jeweils vor den Verkaufsständen 10, also vor interessierenden Teilbereichen, weitere Sensoreinrichtungen 2 angeordnet. Dieser Aufbau erlaubt eine Objektverfolgung des Überwachungsobjektes in dem Überwachungsbereich, also in dem Verkaufsraum 9 unter Verwendung des Objektverfolgungsmoduls 6. Betritt beispielsweise eine Person im Zugang 8 eine der Sensoreinrichtungen 2, so wird der Abdruck der Schuhsohle eingelesen und zunächst mit bereits gespeicherten Objektprofilen verglichen, um festzustellen, ob dieses Objektprofil bereits registriert worden ist. Wenn es sich um ein neues Objektprofil handelt, dann wird es in eine Datenbank aufgenommen. Ferner werden Ort und Uhrzeit des Kontaktes mit der Sensoreinrichtung 2 für diese Person gespeichert. An anderen sinnvollen Stellen, in diesem Beispiel vor den Verkaufsständen 10, sind die weiteren Sensoreinrichtungen 2 installiert, die alle auf die gleiche Datenbank zugreifen können. Betritt die Person, deren Objektprofil im Zugang 8 registriert worden ist, eine zweite Sensoreinrichtung 2, zum Beispiel vor einem Verkaufsstand 10 oder in einem weiteren Zugang 8, so wird das Objektprofil wiedererkannt und der Kontakt mit der Sensoreinrichtung 2 der gleichen Person zugeordnet. Durch die Ausrichtung des Objektprofils kann zusätzlich die Richtung, in der sich die Person bewegt, ermittelt werden.

Das heißt, in dem vorliegenden Fall würde erkannt werden, wenn die Person durch den einen Zugang 8 den Verkaufsraum 9 betritt und durch einen anderen Zugang 8 wieder verlässt. Durch die Sensoreinrichtungen 2 vor den Verkaufsständen 10 kann durch das Einlesen des Objektprofils der Person der Weg der Person in dem Verkaufsraum 9 verfolgt werden und anschließend an der Kasse die eingekauften Produkte einem Einkaufsweg zugeordnet werden.

Auf diese Weise kann die Überwachungsvorrichtung 1 eingesetzt werden, um ein Käuferverhalten zu analysieren, ohne dass der Kunde sich von sichtbaren Sensoren, wie zum Beispiel Überwachungskameras, beeinträchtigt fühlt und somit vielleicht sogar das Kaufhaus meidet. Es ist jedoch auch möglich, dass in den Verkaufsräumen 9 ergänzend Überwachungskameras als Sensoren 3 angeordnet sind, wobei die Objektverfolgung unter Verwendung der Fusion von Daten der weiteren Sensoren 3 und der Sensoreinrichtungen 2 erfolgt.

## Patentansprüche

1. Überwachungsvorrichtung (1) für einen Überwachungsbereich (7,9), in dem sich mindestens ein Überwachungsobjekt aufhalten kann,
mit einer Sensoreinrichtung (2), welche zur Erfassung des Überwachungsobjekts ausgebildet und/oder angeordnet ist,
**dadurch gekennzeichnet, dass**
die Sensoreinrichtung (2) zur ortsaufgelösten Erfassung der Bodenkontaktfläche des Überwachungsobjekts als Objektprofil ausgebildet und/oder angeordnet ist.

2. Überwachungsvorrichtung (1) nach Anspruch 1, **dadurch gekennzeichnet, dass** das Objektprofil eine ortsaufgelöste Kraft- und/oder Wärme- und/oder Konturverteilung aufweist.

3. Überwachungsvorrichtung (1) nach Anspruch 1 oder 2, **dadurch gekennzeichnet, dass** das Objektprofil, insbesondere die Konturverteilung zwei- oder dreidimensional ausgebildet ist.

4. Überwachungsvorrichtung (1) nach einem der vorhergehenden Ansprüchen, **dadurch gekennzeichnet, dass** die Sensoreinrichtung (2) als eine Kamera, ein Lichtscanner, eine Mehrzahl von Drucksensoren, eine Laserabtastung und/oder eine Mehrzahl von Wärmesensoren zur Reibungserkennung ausgebildet ist.

5. Überwachungsvorrichtung (1) nach einem der vorhergehenden Ansprüche, **gekennzeichnet durch** ein Klassifikationsmodul (4), welches ausgebildet ist, das Objektprofil in verschiedene Klassifikationen, wie z.B. Alter, Geschlecht und/oder Bewegungsrichtung einzuteilen.

6. Überwachungsvorrichtung (1) nach einem der vorhergehenden Ansprüche, **gekennzeichnet durch** ein Objekterkennungsmodul (5), welches für einen Vergleich eines gespeicherten Objektprofils mit einem aktuellen Objektprofil ausgebildet ist.

7. Überwachungsvorrichtung (1) nach einem der vorhergehenden Ansprüche, **gekennzeichnet durch** ein Objektverfolgungsmodul (6), welches ausgebildet ist das Überwachungsobjekt unter Verwendung des Objektprofils als Objektmerkmal zu verfolgen.

8. Überwachungsvorrichtung (1) nach Anspruch 7, **dadurch gekennzeichnet, dass** das Objektverfolgungsmodul (6) das Objektprofil als ausschließliches Objektmerkmal bei der Verfolgung verwendet.

9. Überwachungsvorrichtung (1) nach einem der vorhergehenden Ansprüche, **dadurch gekennzeichnet, dass** eine Mehrzahl von derartiger Sensoreinrichtungen (2) in den Eingangs- und/oder Ausgangsbereichen (8) des Überwachungsbereichs (7,9) angeordnet ist, wobei die Überwachungsvorrichtung (1) für ein Zählen von Überwachungsobjekten ausgebildet ist.

10. Überwachungsvorrichtung (1) nach einem der vorhergehenden Ansprüche, **dadurch gekennzeichnet, dass** die Überwachungsvorrichtung (1) zur Aufstellung in einem Geschäft (9) und zur Protokollierung und/oder zur Analyse des Kundenverhaltens ausgebildet ist.

11. Sensoreinrichtung (2) zur Verwendung in der Überwachungsvorrichtung (1) nach einem der vorhergehenden Ansprüche, wobei die Sensoreinrichtung (2) zur ortsaufgelösten Erfassung der Bodenkontaktfläche des Überwachungsobjekts als Objektprofil ausgebildet und/oder angeordnet ist, **dadurch gekennzeichnet, dass** die Messfläche der Sensoreinrichtung (2) verdeckt und/oder an die Umgebung angepasst ausgebildet ist.
